# EUROPEAN PATENT SPECIFICATION

(11) **EP 2 769 889 B1**
(45) Date of publication and mention of the grant of the patent: **05.06.2019**
(21) Application number: 14000570.3
(22) Date of filing: 18.02.2014
(51) Int. Cl.: B60S 1/40, B60S 1/38

(54) **Connector of wiper blade device**
Verbinder für eine Wischblattvorrichtung
Connecteur de dispositif de balai d'essuie-glace

(30) Priority: 21.02.2013 KR 20130018801
(43) Date of publication of application: 27.08.2014
(73) Proprietor: Cap Corporation, Dalseo-gu, Daegu 704-801 (KR)
(72) Inventor: Kim, Myoung Yeon, Ulsan (KR)
(74) Representative: Zeitler Volpert Kandlbinder Patent- und Rechtsanwälte Partnerschaft mbB

(56) References cited:
- WO-A1-2011/120232
- WO-A1-2013/019645
- US-A1- 2010 050 361
- US-A1- 2013 007 975

## Description

This application claims priority from Korean Patent Application No. 10-2013-0018801 filed on February 21, 2013 in the Korean Intellectual Property Office, the disclosure of which is incorporated herein by reference in its entirety.

### BACKGROUND OF THE INVENTION

### 1. Field of the Invention

The present invention relates to a connector of a wiper blade device, and more particularly, to a horizontally symmetrical leg-added side pin arm connector of a wiper blade device which can be easily and selectively connected to or disconnected from leg-added side pin arms of different sizes.

### 2. Description of the Related Art

A power transmission arm of a conventional wiper blade device transmits the power inside a vehicle to a wider blade. To this end, a first end of the power transmission arm is connected to a power supply part while a second end of the power transmission arm is coupled to a clamp of the wiper blade or a connector fixed to the clamp. The power transmission arm is generally referred to as a wiper arm or simply an arm.

The arm may be classified into various types according to the form in which the second end is coupled to the clamp attached to the blade or to the connector fixed to the clamp and the shape and structure of a coupling portion determined by the coupling form. Accordingly, the connector coupled to the arm may also be classified into various shapes and types.

For example, the power transmission arm of the wiper blade device may be classified as a hook arm if its coupling portion is bent in the shape of a hook, a bayonet arm if a coupling protrusion protrudes upward from a long bar, a side pin arm if a pin protrudes from a side of the arm, or a leg-added side pin arm if a leg is formed in addition to a side pin.

Of the above arms, the leg-added side pin arm includes a leg in addition to a side pin. The side pin protrudes from a side of the arm and is inserted into a groove formed in a side surface of the connector. The leg is formed at an upper end of the arm and placed on an upper surface of the connector. Since the leg and the side pin enable the leg-added side pin arm to be coupled more stably to the clamp or the connector than other types of arms, the use of the leg-added side pin arm is increasing day by day.

However, a conventional connector for connecting the leg-added side pin arm is completely fixed to a clamp attached to a blade assembly. Therefore, it is virtually impossible to separate the conventional connector from the clamp. In addition, the conventional connector has a complicated structure to surround and cover the whole clamp. Therefore, no wiper blade other than a wiper blade to which the leg-added side pin arm is fixed can be coupled to the leg-added side pin arm. Furthermore, since the structure of the conventional connector is complicated more than necessary, the manufacture of the conventional connector is accompanied by a huge economic loss.

In addition, the structure of the conventional connector is not compatible with leg-added side pin arms of various sizes. Therefore, whenever a wiper blade is manufactured, an arm of a corresponding type should be manufactured or available. US 2013/0007975 shows the preamble of claim 1.

### SUMMARY OF THE INVENTION

Aspects of the present invention provide a leg-added side pin arm connector which can easily and stably couple a leg-added side pin arm to a clamp of a wiper blade device.

Aspects of the present invention also provide a leg-added side pin arm connector which can be easily coupled to a clamp when necessary and can be separated from the clamp when not necessary so as to use a connector of another type and an arm of another type.

Aspects of the present invention also provide a leg-added side pin arm connector which is compatible with a leg-added side pin arm regardless of whether a leg of the leg-added side pin arm is wide or narrow and is horizontally symmetrical to be suitable for use in either a left hand drive (LHD) vehicle or a right hand drive (RHD) vehicle.

However, aspects of the present invention are not restricted to the one set forth herein. The above and other aspects of the present invention will become more apparent to one of ordinary skill in the art to which the present invention pertains by referencing the detailed description of the present invention given below.

According to an aspect of the present invention, there is provided a connector of a wiper blade device which connects a wiper blade selectively to a first wiper arm and a second wiper arm of different sizes. The connector includes: a body which includes a pair of sidewalls facing each other and an upper surface formed adjacent to the sidewalls; a pin insertion portion which is formed in the sidewalls in a widthwise direction of the body and into which a first pin of the first wiper arm or a second pin of the second wiper arm can be inserted; and a plurality of slits which are formed in the upper surface of the body along a lengthwise direction of the body, wherein the slits include a first slit into which a first leg of the first wiper arm can be inserted and a second slit into which a second leg of the second wiper arm can be inserted.

The slits further include a third slit which is symmetrical to the first slit with respect to a central axis in the lengthwise direction of the body and a fourth slit which is symmetrical to the second slit with respect to the central axis in the lengthwise direction of the body. The first slit, the second slit, the third slit and the fourth slit are located on the same line along the widthwise direction of the body.

According to another aspect of the present invention, there is provided a connector assembly which connects a wiper blade selectively to a first wiper arm and a second wiper arm of different sizes. The connector assembly includes: a base which is removably coupled to a clamp of the wiper blade; and the connector of any one of claims 1 through 3 which is coupled to the base.

The base may include: a plurality of holding portions which are formed at a lower end of the base such that the clamp can be inserted and fixed to the base; a first coupling portion and a second coupling portion which are respectively formed on both sides of an upper end of the base in a lengthwise direction of the wiper blade; and an insertion groove which is formed at the same position as the pin insertion portion of the connector.

According to another aspect of the present invention, there is provided a wiper blade which is connected selectively to a first wiper arm and a second wiper arm of different sizes. The wiper blade includes: a rubber which is provided to clean a windshield; a body spring which supports the rubber; a clamp which holds the body spring; and the connector assembly of any one of claims 4 and 5 which is coupled to the clamp.

### BRIEF DESCRIPTION OF THE DRAWINGS

The above and other aspects and features of the present invention will become more apparent by describing in detail exemplary embodiments thereof with reference to the attached drawings, in which:
FIG. 1A is an exploded perspective view of a leg-added side pin wiper blade device according to the present invention, and FIG. 1B is an assembled perspective view of the leg-added side pin wiper blade device according to the present invention;
FIG. 2 is a perspective view of a leg-added side pin arm connector assembly of the wiper blade device according to the present invention;
FIG. 3A is a perspective view of a leg-added side pin arm connector of the wiper blade device according to the present invention, and FIG. 3B is a plan view of the leg-added side pin arm connector of the wiper blade device according to the present invention;
FIG. 4A is an exploded perspective view illustrating a clamp and a base of the leg-added side pin arm connector assembly of the wiper blade device according to the present invention, and FIG. 4B is an assembled perspective view of the clamp and the base;
FIG. 5A is a coupled perspective view of the leg-added side pin arm connector and a first leg-added side pin arm of the wiper blade device according to the present invention, and FIG. 5B is a coupled perspective view of the leg-added side pin arm connector and a second leg-added side pin arm of the wiper blade device according to the present invention; and
FIG. 6 is a coupled perspective view of the leg-added side pin arm connector of the wiper blade device according to the present invention and a leg-added side pin arm of a right hand drive (RHD) vehicle.

### DETAILED DESCRIPTION OF THE INVENTION

Advantages and features of the present invention and methods of accomplishing the same may be understood more readily by reference to the following detailed description of exemplary embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

In some embodiments, well-known processes, well-known structures and well-known technologies will not be specifically described in order to avoid ambiguous interpretation of the present invention.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated components, steps, and/or operations, but do not preclude the presence or addition of one or more other components, steps, operations, and/or groups thereof. As used herein, the term "and/or" includes any and all combinations of one or more of the associated listed items.

Embodiments of the invention are described herein with reference to perspective, cross-section, side, and/or schematic illustrations that are illustrations of idealized embodiments of the invention. As such, variations from the shapes of the illustrations as a result, for example, of manufacturing techniques and/or tolerances, are to be expected. Thus, embodiments of the invention should not be construed as limited to the particular shapes of regions illustrated herein but are to include deviations in shapes that result, for example, from manufacturing. In addition, each component shown in figures of the present invention may have been enlarged or reduced for ease of description.

Hereinafter, embodiments of the present invention will be described in detail with reference to the attached drawings.

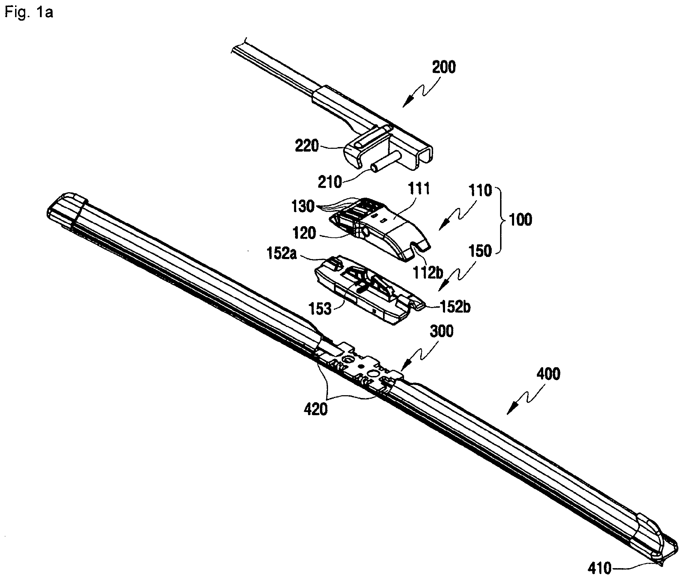

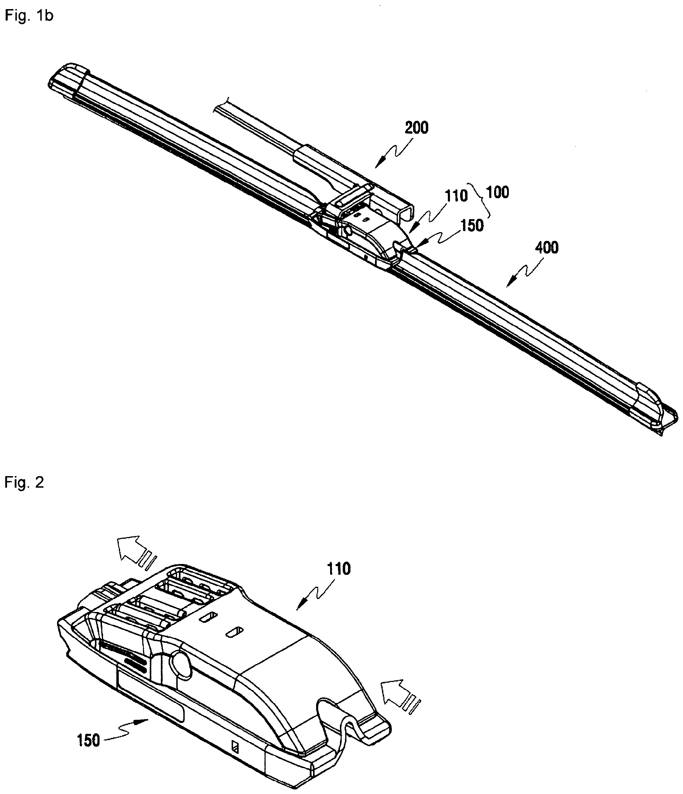

FIG. 1A is an exploded perspective view of a leg-added side pin wiper blade device according to the present invention. FIG. 1B is an assembled perspective view of the leg-added side pin wiper blade device according to the present invention.

FIG. 2 is a perspective view of a leg-added side pin arm connector assembly 100 of the wiper blade device according to the present invention.

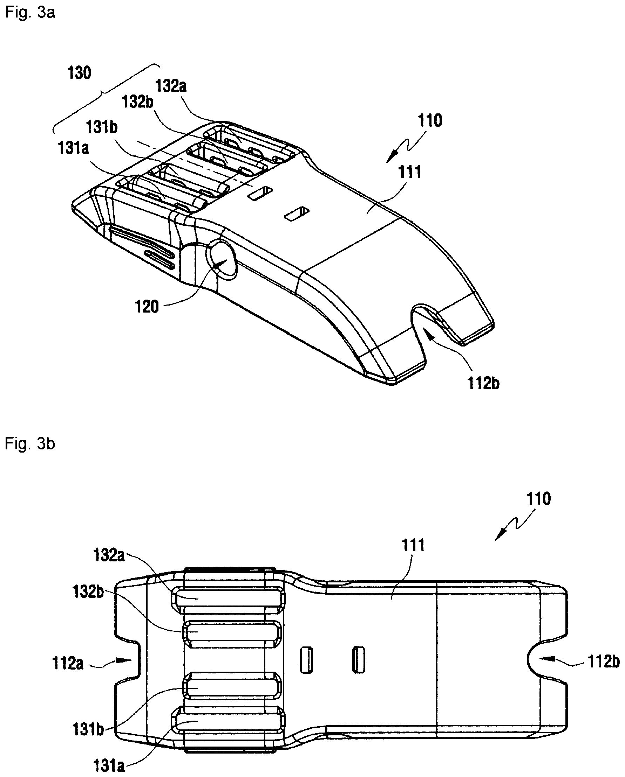

FIG. 3A is a perspective view of a leg-added side pin arm connector 110 of the wiper blade device according to the present invention. FIG. 3B is a plan view of the leg-added side pin arm connector 110 of the wiper blade device according to the present invention.

Referring to FIGS. 1A and 1B, the leg-added side pin wiper blade device according to the present invention includes a wiper blade 400, a clamp 300 connected to the wiper blade 400, and a leg-added side pin arm 200 which is an example of a power transmission arm connected to a power supply of a vehicle. The wiper blade 400 is very obvious to those skilled in the art, and thus a detailed description thereof will be omitted. In the present invention, the shape and structure of the wiper blade 400 are not limited to a particular shape and structure.

The wiper blade device further includes the leg-added side pin arm connector 110 as an auxiliary member used to connect the leg-added side pin arm 200 to the clamp 300.

The connector 110 may be coupled to a base 150, thereby forming the connector assembly 100 which is connected to the clamp 300 that holds a body spring 420 of the wiper blade 400. The connector 110 may be coupled to the base 150 along a lengthwise direction of the wiper blade 400, or the connector 110 and the base 150 may be formed as a single piece. This will be described later.

That is, in the present invention, the connector assembly 100 may be coupled to the clamp 300 so as to use the leg-added side pin arm 200. In addition, the connector assembly 100 may be separated from the clamp 300, and a connector of another shape may be connected to the clamp 300 so as to use an arm of a type other than the leg-added side pin arm 200.

The leg-added side pin arm 200 includes a leg 220 which is placed on the connector 110 and a pin 210 which is inserted into a pin insertion portion 120 of the connector 110.

The clamp 300 has a basic structure of a clamp and connects the wiper blade 400 and the connector assembly 100. The clamp 300 is very obvious to those skilled in the art, and thus a detailed description thereof will be omitted. In the present invention, the shape and structure of the clamp 300 are not limited to a particular shape and structure.

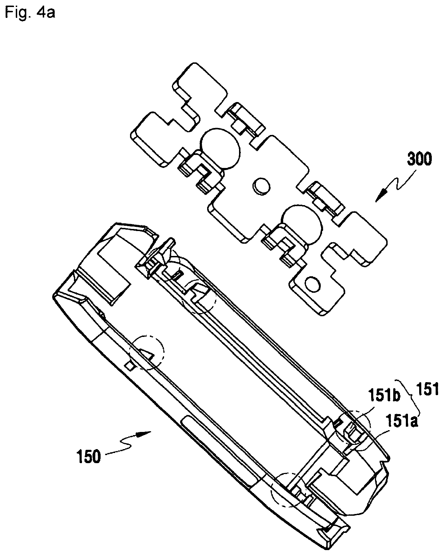

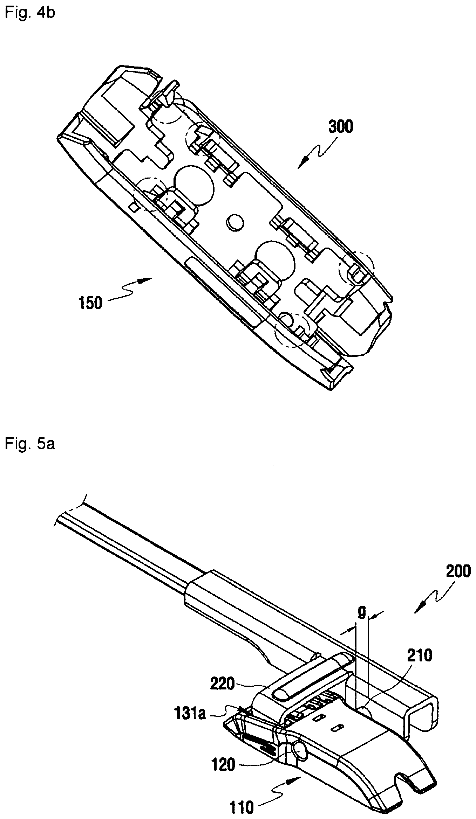

FIG. 4A is an exploded perspective view illustrating the clamp 300 and the base 150 of the leg-added side pin arm connector assembly 100 of the wiper blade device according to the present invention. FIG. 4B is an assembled perspective view of the clamp 300 and the base 150.

A side of the clamp 300 may include holding portions and may be coupled to the body spring 420 which supports a rubber 410 of the wiper blade 400 or may be coupled to the body spring 420 by burring. The other side of the clamp 300 may be coupled to the base 150 of the connector assembly 100 of the present invention.

The base 150 may include a plurality of holding portions 151 at a lower end thereof. The holding portions 151 may protrude toward the clamp 300 such that the clamp 300 can be inserted and fixed to the base 150. As illustrated in FIGS. 4A and 4B, each of the holding portions 151 may include a clamp insertion groove 151a and a coupling protrusion 151b which is coupled to the clamp 300 as the clamp 300 is inserted into the clamp insertion groove 151a.

The base 150 may further include a first coupling portion 152a and a second coupling portion 152b respectively on both sides of an upper end thereof along the lengthwise direction of the wiper blade 400. Accordingly, the connector 110 may be coupled to a spoiler of the wiper blade 400 as if they were a single piece.

The base 150 may further include an insertion groove 153 at the upper end thereof. The insertion groove 153 may be formed at the same position as the pin insertion portion 120 of the connector 110 to support the pin 210 of the leg-added side pin arm 200, which is inserted or coupled to the pin insertion portion 120 of the connector 110, and allow the pin 210 to pass therethrough.

That is, as illustrated in FIGS. 1A and 2, the base 150 according to the current embodiment includes the insertion groove 153 through which the pin 210 of the leg-added side pin arm 200 passes. Therefore, the pin 210 of the leg-added side pin arm 200 that passes through the pin insertion portion 120 of the connector 110 may be coupled to the insertion groove 153.

In a case where the pin 210 of the leg-added side pin arm 200 is inserted into the connector assembly 100, the pin insertion portion 120 of the connector 110 and the insertion groove 153 of the base 150 may allow the pin 210 to be inserted or coupled thereto. On the other hand, in a case where the connector assembly 100 is separated from the clamp 300 of the wiper blade 400 and then an arm of a type other than the legadded side pin arm 200 is coupled to the clamp 300 as described above, the pin insertion hole 120 of the connector 110 and the insertion groove 153 of the base 150 may be used for other purposes.

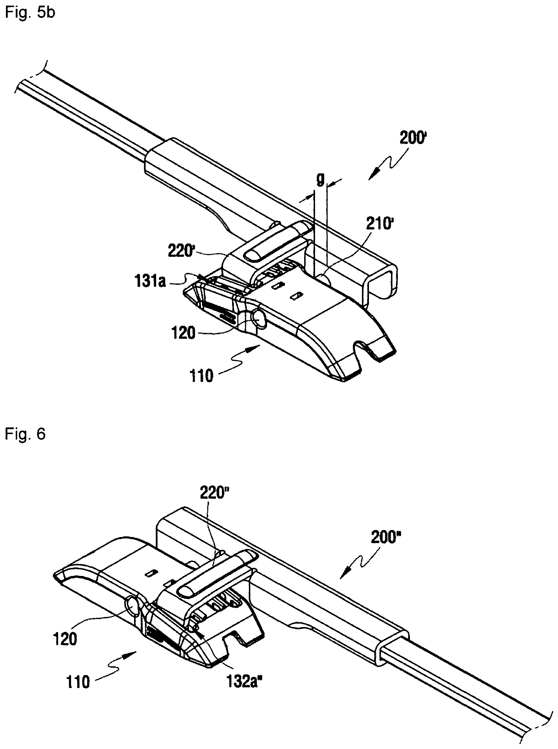

Referring to FIG. 3A, the connector 110 coupled to the base 150 is designed to connect the wiper blade 400 selectively to leg-added side pin arms (hereinafter, referred to as wiper arms) of different sizes, that is, a first wiper arm 200 and a second wiper arm 200' (see FIG. 5A and 5B).

The connector 110 includes a body 111 which includes a pair of sidewalls facing each other and an upper surface which is formed adjacent to the sidewalls; the pin insertion portion 120 which is formed in the sidewalls in a widthwise direction of the body 111 and into which a first pin 210 of the first wiper arm 200 or a second pin 210' of the second wiper arm 200' can be inserted; and a plurality of slits 130 which are formed in the upper surface of the body 111 along a lengthwise direction of the body 111 such that a bent end of a first leg 220 of the first wiper arm 200 or a bent end of a second leg 220' of the second wiper arm 200' can be inserted thereinto.

The slits 130 may include a first slit 131a into which the first leg 220 of the first wiper arm 200 can be inserted and a second slit 131b which is separated from the first slit 131a in the widthwise direction of the body 111 and into which the second leg 220' of the second wiper arm 200' can be inserted.

The pin insertion portion 120 may be formed in the sidewalls of the body 111 in the shape of a hole that penetrates through the sidewalls in the widthwise direction of the body 111 or in the shape of a groove that does not penetrate through the sidewalls in the widthwise direction of the body 111.

The pin insertion portion 120 may be formed as a single pin insertion portion 120 into which either of the first pin 210 of the first wiper arm 200 and the second pin 210' of the second wiper arm 200' can be inserted or may be formed as a plurality of pin insertion portions 120 into which the first pin 210 of the first wiper arm 200 and the second pin 210' of the second wiper arm 200' can respectively be inserted.

Therefore, the pin 210 of the leg-added side pin arm 200 can be inserted or coupled to the pin insertion portion 120 formed in both sidewalls of the body 111 of the connector 110, and the leg 220 of the leg-added side pin arm 200 can be inserted or coupled to the slits 130 formed in the upper surface of the body 111 to be open perpendicularly.

In addition, the connector 110 includes a first coupling groove 112a and a second coupling groove 112b respectively at both sides of a lower end thereof along the lengthwise direction of the wiper blade 400. Accordingly, the connector 110 may be coupled to the base 150 and the spoiler of the wiper blade 400 as if they were a single piece (see FIG. 2).

FIG. 5A is a coupled perspective view of the leg-added side pin arm connector 110 and the first leg-added side pin arm (i.e., the first wiper arm) 200 of the wiper blade device according to the present invention. FIG. 5B is a coupled perspective view of the leg-added side pin arm connector 110 and the second leg-added side pin arm (i.e., the second wiper arm) 200' of the wiper blade device according to the present invention.

The pin insertion portion 120 and the slits 130 may be formed at positions corresponding to the pin 210 of the leg-added side pin arm 200 and the bent end of the leg 220 of the leg-added side pin arm 200, respectively. The bent end of the leg 220 may be inserted into one of the slits 130, and the pin 210 may be inserted into the pin insertion portion 120. As a result, the leg-added side pin arm connector 110 and the leg-added side pin arm 200 may be coupled to each other.

When the leg-added side pin arm 200 is coupled to the leg-added side pin arm connector 110, a gap g is formed between a side surface of the leg-added side pin arm 200 having the pin 210 and the leg 220 and a side surface of the connector 110 which corresponds to the side surface of the leg-added side pin arm 200. The gap g prevents abrasion due to the friction of the connector 110 against the arm 200 during the operation of the wiper blade 400.

The leg 220 of the leg-added side pin arm 200 may have various sizes. Therefore, the present invention provides the connector assembly 100 that is compatible with conventional leg-added side pin arms of various sizes.

To this end, in an embodiment of the present invention, two or more slits 130 may be formed in a widthwise direction of the leg 220 of the leg-added side pin arm 200 such that the connector assembly 100 is compatible with the arm 200 regardless of whether the leg 220 of the leg-added side pin arm 200 is wide or narrow.

That is, the slits 130 may include the first slit 131a and the second slit 131b which is separated from the first slit 131a in the widthwise direction of the body 111, such that the different-sized legs 220 and 220' of the first wiper arm 200 and the second wiper arm 200' can be coupled to the slits 130 (see FIG. 3A).

The slits 130 may further include a third slit 132a which is symmetrical to the first slit 131a with respect to a central axis in the lengthwise direction of the body 111 of the connector 110 and a fourth slit 132b which is symmetrical to the second slit 131b with respect to the central axis in the lengthwise direction of the body 111.

Accordingly, the connector 110 according to the present invention is applicable to a leg-added side pin arm of a right hand drive (RHD) vehicle.

FIG. 6 is a coupled perspective view of the leg-added side pin arm connector 110 of the wiper blade device according to the present invention and a leg-added side pin arm of an RHD vehicle.

Referring to FIG. 6, if wide, a leg 220" of the leg-added side pin arm can be inserted into a third slit 132a". If narrow, the leg 220" of the leg-added side pin arm can be inserted into the fourth slit 132b" as well as the third slit 132a".

Therefore, the connector 110 of the present invention can be efficiently used to couple a leg-added side pin arm having various leg sizes regardless of whether a vehicle is a left hand drive (LHD) or RHD vehicle.

As described above, a conventional leg-added side pin arm connector is completely fixed to a clamp attached to a wiper blade. Therefore, it is virtually impossible to separate the conventional leg-added side pin arm connector from the clamp. In addition, the conventional leg-added side pin arm connector has a complicated structure to surround and cover the whole clamp. Therefore, no wiper blade other than the wiper blade to which the leg-added side pin arm is fixed can be coupled to the leg-added side pin arm. On the other hand, the connector 110 of the wiper blade device according to the present invention cannot only couple the leg-added side pin arm 200 to the clamp 300 of the wiper blade device but also can be easily coupled to or separated from the clamp 300. Therefore, connectors and arms of various sizes can be applied.

Furthermore, the connector 110 of the wiper blade device according to the present invention is compatible with the leg-added side pin arm 200 regardless of whether the leg 220 of the leg-added side pin arm 200 is wide or narrow. Since the connector of the present invention is horizontally symmetrical, it can be used in either an LHD vehicle or an RHD vehicle.

The present invention described above can provide a leg-added side pin arm connector which can easily and stably couple a leg-added side pin arm to a clamp of a wiper blade device.

The present invention can also provide a leg-added side pin arm connector which can be easily coupled to a clamp when necessary and can be separated from the clamp when not necessary so as to use a connector of another type and an arm of another type.

The present invention can also provide a leg-added side pin arm connector which is compatible with a leg-added side pin arm regardless of whether a leg of the leg-added side pin arm is wide or narrow and is horizontally symmetrical to be suitable for use in either an LHD vehicle or an RHD vehicle.

However, the effects of the present invention are not restricted to the one set forth herein. The above and other effects of the present invention will become more apparent to one of daily skill in the art to which the present invention pertains by referencing the claims.

While the present invention has been particularly shown and described with reference to exemplary embodiments thereof, it will be understood by those of ordinary skill in the art that various changes in form and detail may be made therein without departing from the following claims. The exemplary embodiments should be considered in a descriptive sense only and not for purposes of limitation.

## Claims

1. A connector (110) of a wiper blade device which connects a wiper blade (400) selectively to a first wiper arm (200) and a second wiper arm (200') of different sizes, the connector comprising:
a body (111) which comprises a pair of sidewalls facing each other and an upper surface formed adjacent to the sidewalls;
a pin insertion portion (120) which is formed in the sidewalls in a widthwise direction of the body (111) and into which a first pin (210) of the first wiper arm (200) or a second pin (210') of the second wiper arm (200') can be inserted; and
a plurality of slits (130) which are formed in the upper surface of the body (111) along a lengthwise direction of the body,
wherein the slits (130) comprise a first slit (131a) into which a first leg (220) of the first wiper arm (200) can be inserted and a second slit (131b) into which a second leg (220') of the second wiper arm (200') can be inserted,
wherein the slits (130) further comprise a third slit (132a) which is symmetrical to the first slit (131a) with respect to a central axis in the lengthwise direction of the body (111), and
wherein the slits (130) further comprise a fourth slit (132b) which is symmetrical to the second slit (131b) with respect to the central axis in the lengthwise direction of the body (111),
**characterized in that** the first slit (131a), the second slit (131b), the third slit (132a), and the fourth slit (132b) are located on a same line along the widthwise direction of the body (111).

2. A connector assembly (100) which connects a wiper blade (400) selectively to a first wiper arm (200) and a second wiper arm (200') of different sizes, the connector assembly (100) comprising:
a base (150) which is removably coupled to a clamp (300) of the wiper blade (400); and
the connector (110) of claim 1 which is coupled to the base (150).

3. The connector assembly (100) of claim 2, wherein the base (150) comprises:
a plurality of holding portions (151) which are formed at a lower end of the base (150) such that the clamp (300) can be inserted and fixed to the base (150);
a first coupling portion (152a) and a second coupling portion (152b) which are respectively formed on both sides of an upper end of the base (150) in a lengthwise direction of the wiper blade (400); and
an insertion groove (153) which is formed at the same position as the pin insertion portion (120) of the connector (110).

4. A wiper blade (400) which is connected selectively to a first wiper arm (200) and a second wiper arm (200') of different sizes, the wiper blade (400) comprising:
a rubber (410) which is provided to clean a windshield;
a body spring (420) which supports the rubber (410);
a clamp which holds the body spring (420); and
the connector assembly (100) of claim 2 or 3 which is coupled to the clamp.

## Patentansprüche

1. Verbinder (110) einer Wischerblattvorrichtung, der ein Wischerblatt (400) selektiv mit einem ersten Wischerarm (200) und einem zweiten Wischerarm (200') mit verschiedenen Größen verbindet, wobei der Verbinder umfasst:
einen Körper (111), der ein Paar von Seitenwänden, die einander gegenüberliegen, und eine obere Oberfläche, die angrenzend an die Seitenwände ausgebildet ist, umfasst;
einen Stifteinsetzabschnitt (120), der in den Seitenwänden in einer Breitenrichtung des Körpers (111) ausgebildet ist und in den ein erster Stift (210) des ersten Wischerarms (200) oder ein zweiter Stift (210') des zweiten Wischerarms (200') eingesetzt werden kann; und
eine Mehrzahl von Schlitzen (130), die in der oberen Oberfläche des Körpers (111) entlang der Längsrichtung des Körpers ausgebildet sind,
wobei die Schlitze (130) einen ersten Schlitz (131a), in den ein erster Schaft (220) des ersten Wischerarms (200) eingesetzt werden kann, und einen zweiten Schlitz (131b), in den ein zweiter Schaft (220') des zweiten Wischerarms (200') eingesetzt werden kann, umfassen,
wobei die Schlitze (130) ferner einen dritten Schlitz (132a) umfassen, der zu dem ersten Schlitz (131a) in Bezug auf die Mittelachse in der Längsrichtung des Körpers (111) symmetrisch ist,
wobei die Schlitze (130) ferner einen vierten Schlitz (132b) umfassen, der zu dem zweiten Schlitz (131b) in Bezug auf die Mittelachse in der Längsrichtung des Körpers (111) symmetrisch ist,
**dadurch gekennzeichnet, dass** sich der erste Schlitz (131a), der zweite Schlitz (131b), der dritte Schlitz (132a) und der vierte Schlitz (132b) auf derselben Linie entlang der Breitenrichtung des Körpers (111) befinden.

2. Verbinderanordnung (100), die ein Wischerblatt (400) selektiv mit einem ersten Wischerarm (200) und einem zweiten Wischerarm (200') mit verschiedenen Größen verbindet, wobei die Verbinderanordnung (100) umfasst:
eine Basis (150), die lösbar mit einer Halterung (300) des Wischerblatts (400) verbunden ist; und
den Verbinder (110) nach Anspruch 1, der mit der Basis (150) gekoppelt ist.

3. Verbinderanordnung (100) nach Anspruch 2, bei der die Basis (150) umfasst:
eine Mehrzahl von Halteabschnitten (151), die derart an einem unteren Ende der Basis (150) ausgebildet sind, dass die Halterung (300) in die Basis (150) eingesetzt und daran angebracht werden kann;
einen ersten Kopplungsabschnitt (152a) und einen zweiten Kopplungsabschnitt (152b), die jeweils auf beiden Seiten eines oberen Endes der Basis (150) in einer Längsrichtung des Wischerblatts (400) ausgebildet sind; und
eine Einsetzrille (153), die an derselben Position wie der Stifteinsetzabschnitt (120) des Verbinders (110) ausgebildet ist.

4. Wischerblatt (400), das selektiv mit einem ersten Wischerarm (200) und einem zweiten Wischerarm (200') mit verschiedenen Größen verbunden wird, wobei das Wischerblatt (400) umfasst:
einen Kautschuk (410), der zum Säubern einer Windschutzscheibe bereitgestellt ist;
eine Körperfeder (420), die den Kautschuk (410) stützt;
eine Halterung, welche die Körperfeder (420) hält; und
die Verbinderanordnung (100) nach Anspruch 2 oder 3, die mit der Halterung gekoppelt ist.

## Revendications

1. Connecteur (110) d'un dispositif de balai d'essuie-glace qui connecte un balai d'essuie-glace (400) sélectivement à un premier bras d'essuieglace (200) et à un deuxième bras d'essuie-glace (200') de différentes tailles, le connecteur comprenant :
un corps (111) qui comprend une paire de parois latérales faisant face l'une à l'autre et une surface supérieure formée de manière adjacente aux parois latérales ;
une portion d'insertion de broche (120) qui est formée dans les parois latérales dans une direction en largeur du corps (111) et dans laquelle une première broche (210) du premier bras d'essuie-glace (200) ou une deuxième broche (210') du deuxième bras d'essuie-glace (200') peut être insérée ; et
une pluralité de fentes (130) qui sont formées dans la surface supérieure du corps (111) le long d'une direction en longueur du corps,
dans lequel les fentes (130) comprennent une première fente (131a) dans laquelle une première patte (220) du premier bras d'essuie-glace (200) peut être insérée et une deuxième fente (131b) dans laquelle une deuxième patte (220') du deuxième bras d'essuie-glace (200') peut être insérée,
dans lequel le fentes (130) comprennent en outre une troisième fente (132a) qui est symétrique à la première fente (131a) par rapport à un axe central dans la direction en longueur du corps (111), et
dans lequel les fentes (130) comprennent en outre une quatrième fente (132b) qui est symétrique à la deuxième fente (131b) par rapport à l'axe central dans la direction en longueur du corps (111),
**caractérisé en ce que** la première fente (131a), la deuxième fente (131b), la troisième fente (132a), et la quatrième fente (132b) sont situées sur une même ligne le long de la direction en largeur du corps (111).

2. Assemblage de connecteur (100) qui connecte un balai d'essuieglace (400) sélectivement à un premier bras d'essuie-glace (200) et à un deuxième bras d'essuie-glace (200') de différentes tailles, l'assemblage de connecteur (100) comprenant :
une base (150) qui est couplée de manière détachable à une pince (300) du balai d'essuie-glace (400) ; et
le connecteur (110) selon la revendication 1, qui est couplé à la base (150).

3. Assemblage de connecteur (100) selon la revendication 2, dans lequel la base (150) comprend :
une pluralité de portions de maintien (151) qui sont formées à une extrémité inférieure de la base (150) de sorte que la pince (300) peut être insérée et fixée à la base (150) ;
une première portion de couplage (152a) et une deuxième portion de couplage (152b) qui sont respectivement formées sur les deux côtés d'une extrémité supérieure de la base (150) dans une direction en longueur du balai d'essuie-glace (400) ; et
une rainure d'insertion (153) qui est formée à la même position que la portion d'insertion de broche (120) du connecteur (110).

4. Balai d'essuie-glace (400) qui est connecté sélectivement à un premier bras d'essuie-glace (200) et à un deuxième bras d'essuie-glace (200') de tailles différentes, le balai d'essuie-glace (400) comprenant :
un caoutchouc (410) qui est prévu pour nettoyer un pare-brise ;
un ressort de corps (420) qui supporte le caoutchouc (410) ;
une pince qui maintient le ressort de corps (420) ; et
l'assemblage de connecteur (100) selon la revendication 2 ou 3, qui est couplé à la pince.
